(19)

Europäisches Patentamt
European Patent Office
Office européen des brevets

(11)  **EP 1 818 936 A1**

(12)  **EUROPEAN PATENT APPLICATION**

(43) Date of publication:
**15.08.2007 Bulletin 2007/33**

(51) Int Cl.:
*G11B 27/10* (2006.01)     *G11B 20/12* (2006.01)

(21) Application number: **07101904.6**

(22) Date of filing: **07.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.02.2006 JP 2006030483**

(71) Applicant: **Sony Corporation**
**Minato-ku**
**Tokyo (JP)**

(72) Inventors:
• **Yoshimura, Shunji**
  **Tokyo (JP)**
• **Kobayashi, Kenichiro**
  **Tokyo (JP)**

(74) Representative: **Melzer, Wolfgang**
**Mitscherlich & Partner,**
**Sonnenstrasse 33**
**80331 München (DE)**

(54)  **Information processing apparatus, method and program product thereof**

(57)     An information processing apparatus includes a counting means (32) for counting the number of prescribed parts of the contents of a speech, a speech time measuring means (33) for measuring time of the speech and a calculating means (35) for calculating speed of the speech based on the number of the prescribed parts counted by the counting means and time of the speech measured by the speech time measuring means.

## FIG. 3

EP 1 818 936 A1

**Description**

CROSS REFERENCE TO RELATED APPLICATIONS

The present invention contains subject matter related to Japanese Patent Application JP 2006-030483 filed in the Japanese Patent Office on February 8, 2006, the entire contents of which being incorporated herein by reference.

BACKGROUND OF THE INVENTION

1. FIELD OF THE INVENTION

The invention relates to an information processing apparatus, a method and a program product thereof, particularly relates to the information processing apparatus, the method and the program product thereof which are capable of calculating speech speed easily.

2. DESCRIPTION OF THE RELATED ART

In a related art, there is a technique of detecting speech speed by speech recognition. The detected speech speed is used for adjusting playback speed of recorded speech.

In JP-A-2004-128849 (Patent document 1), there is disclosed a technique for eliminating the delay of output timing between a speech and a caption by calculating the number of caption pictures from the number of words capable of being spoken within a period of time of a voiced section and the number of characters capable of being displayed on a picture, and by sequentially displaying caption information at a time interval obtained by dividing the time length of the voiced section by the number of caption pictures.

SUMMARY OF THE INVENTION

It can be considered that the number of characters included a character string which represents the contents of speech in a text data format is counted by speech recognition, and speed of the speech, namely, speech speed is calculated from the counted number of characters and speech time, however, in this case, it is necessary that at least recognition of syllables is correctly performed by the speech recognition for detecting correct speech speed. Although such recognition can be performed with reasonable accuracy even by the current speech recognition technique, the recognition accuracy and a processing scale (calculation quantity for processing) have a tradeoff relation, and it is difficult to perform recognition with high accuracy without drastically increasing costs of equipment. Suppose that recognition of syllables are performed incorrectly, it is difficult that the number of characters is correctly counted, as a result, it is difficult to calculate correct speech speed.

The invention has been made in view of the above situation, and it is desirable to calculate speech speed easily as compared with a case that the speech speed is calculated by using, for example, speech recognition.

An information processing apparatus according to an embodiment of the invention includes a counting means for counting the number of prescribed parts of the contents of a speech, a speech time measuring means for measuring time of the speech, and a calculating means for calculating speed of the speech based on the number of the prescribed parts counted by the counting means and time of the speech measured by the speech time measuring means.

The prescribed parts of the contents of the speech may be the number of words corresponding to a character string representing the contents of the speech.

The prescribed parts of the contents of the speech may be the number of characters included in a character string representing the contents of the speech.

The prescribed parts of the contents of the speech may be the number of syllables corresponding to a character string representing the contents of the speech.

The prescribed parts of the contents of the speech may be the number of phonemes corresponding to a character string representing the contents of the speech.

It is possible to allow the calculating means to calculate a value represented by the number of words per unit time as the speed of the speech.

The character string may be displayed on a picture when a content is played, and the speech may be audio outputted so as to correspond to display of the character string.

The information processing apparatus can further include a detecting means for detecting a section of the content where a speech speed calculated by the calculating means is higher than a prescribed speed as a vigorous section on a subject.

The information processing apparatus can further include an extraction means for extracting information of character strings and audio information included in the content, and a control means for associating a character string to be a target for counting the number of words with a speech to be a target for measuring the speech time, which are used for calculation of the speech speed in plural character strings whose information is extracted by the extraction means and plural speeches outputted based on extracted audio information.

It is possible to allow the speech time measuring means to measure time of speeches based on information of display time instants of respective character strings included in the content.

The information processing apparatus can further include an area extraction means for extracting a display area of the character string displayed on the picture when the content is played. In this case, it is possible to allow the counting means to count the number of words based on an image of the area extracted by the area extraction means.

It is possible to allow the speech time measuring means to measure time during which the character string is displayed at the area extracted by the area extraction means as the speech time.

The information processing apparatus can further includes a recognition means for recognizing characters included in the character string displayed on the picture when the content is played by character recognition. In this case, it is possible to allow the counting means to count the number of syllables corresponding to characters recognized by the recognition means.

The information processing apparatus can further includes a recognition means for recognizing characters included in the character string displayed on the picture when the content is played by character recognition. In this case, it is possible to allow the counting means to counting the number of phonemes corresponding to characters recognized by the recognition means.

An information processing method or a program product according to an embodiment of the invention includes the steps of counting the number of prescribed parts of the contents of a speech, measuring time of the speech and calculating speed of the speech based on the counted number of prescribed parts and the measured time of the speech.

According to an embodiment of the invention, the number of prescribed parts of the contents of a speech is counted, and time of the speech is measured. In addition, speed of the speech is calculated based on the counted number of prescribed parts and the measured time of the speech.

BRIEF DESCRIPTION OF THE DRAWINGS

Fig. 1 is a diagram showing an information processing apparatus according to an embodiment of the invention;
Fig. 2 is a block diagram showing a hardware configuration example of the information processing apparatus;
Fig. 3 is a block diagram showing a function configuration example of the information processing apparatus;
Fig. 4 is a diagram showing an example of speech speed calculation;
Fig. 5 is a flowchart explaining the process of calculating speech speed in the information processing apparatus of Fig. 3;
Fig. 6 is a block diagram showing another function configuration example of the information processing apparatus;
Fig. 7 is a chart showing an example of information included in caption data and an example of calculated results of speech speed calculated based on the included information;
Fig. 8 is a flowchart explaining the process of calculating speech speed in the information processing apparatus of Fig. 6;
Fig. 9 is a block diagram showing further another function configuration example of the information processing apparatus;
Fig. 10 is a view showing an example of an image;
Fig. 11 is a flowchart explaining the process of calculating speech speed in the information processing apparatus of Fig. 9;
Fig. 12 is a block diagram showing a function configuration example of the information processing apparatus;
Fig. 13 is a flowchart explaining the process of calculating speech speed in the information processing apparatus of Fig. 12;
Fig. 14 is a diagram showing examples of speech times obtained by analyzing audio data and speech times obtained from time during which the character string is displayed;
Fig. 15 is a block diagram showing a function configuration example of an information processing apparatus; and
Fig. 16 is a flowchart explaining the process of generating attribute information in the information processing apparatus of Fig. 15.

DESCRIPTION OF THE PREFERRED EMBODIMENTS

Embodiments of the invention will be described below, and the correspondence between constituent features of the invention and embodiments described in the specification and the drawings is exemplified as follows. The description is made for confirming that embodiments which support the invention are written in the specification and the drawings. Therefore, if there is an embodiment that is written in the specification and the drawings but not written here as the embodiment corresponding to a constituent feature of the invention, that does not mean that the embodiment does not correspond to the constituent feature. Conversely, if an embodiment is written here as the embodiment corresponding to a constituent feature, that does not mean that the embodiment does not correspond to other than the constituent feature.

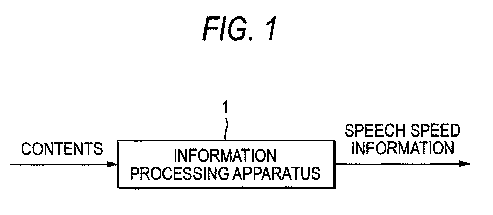

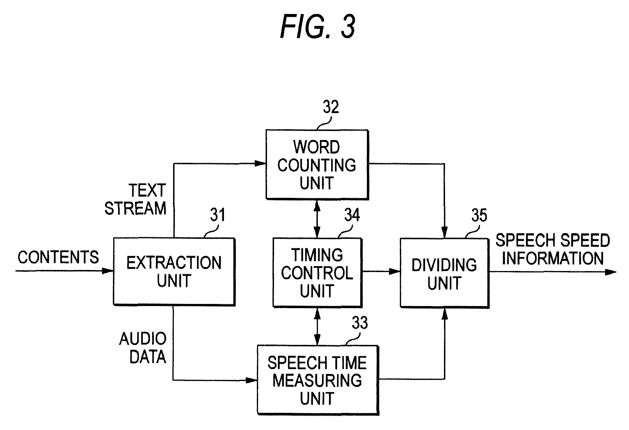

An information processing apparatus (for example, an information processing apparatus 1 in Fig. 1) according to an embodiment of the invention includes a counting means (a word counting unit 32 in Fig. 3) for counting the number of prescribed parts of the contents of a speech, a speech time measuring means (for example, a speech time measuring unit 33 in Fig. 3) for measuring time of the speech, and a calculating means (for example, dividing unit 35 in Fig. 3) for calculating speed of the speech based on the number of prescribed parts counted by the counting means and time of the speech measured by the speech time measuring means.

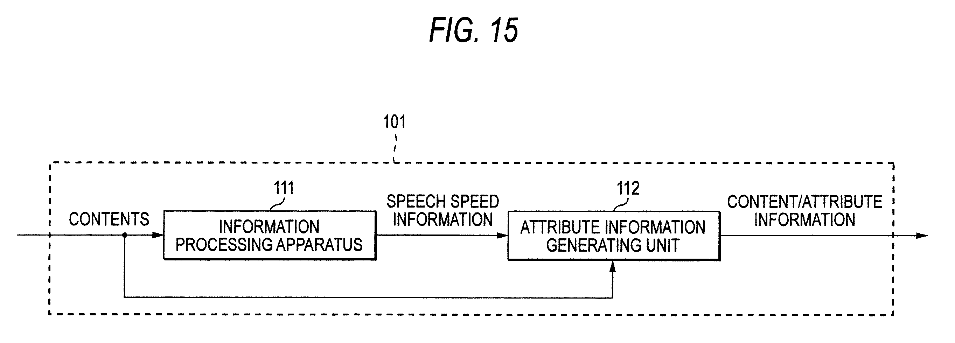

The information processing apparatus can further include a detecting means (for example, an attribute information generating unit 112 in Fig. 15) for detecting a section of the content where a speech speed calculated by the calculating means is higher than a prescribed speed as a vigorous section of a subject.

The information processing apparatus can further include an extraction means (for example, for example, an extraction unit 31 in Fig. 3) for extracting information of character strings and audio information included in the content and a control means (for example, a timing control unit 34 in Fig. 3) for associating a character string to be a target for counting the number of prescribed parts with a speech to be a target for measuring the speech time, which are used for calculation of the speech speed, in plural character strings whose information is extracted by the extraction means and plural speeches outputted based on the extracted audio information.

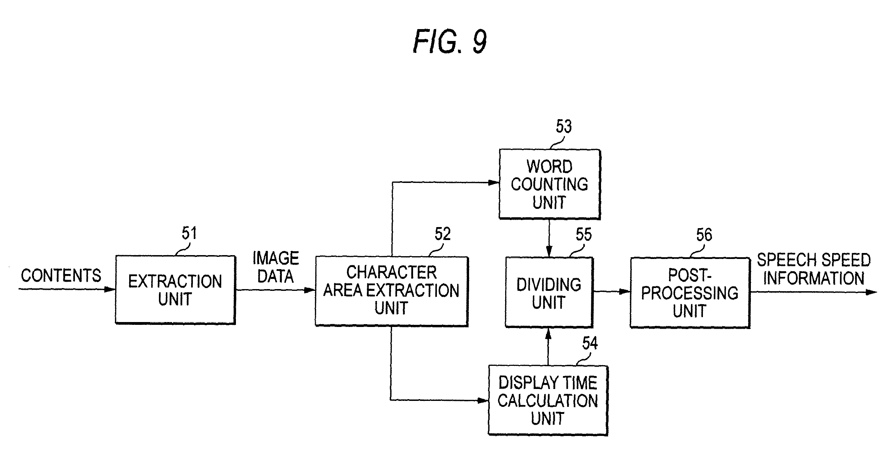

The information processing apparatus can further include an area extraction means (for example, a character area extraction unit 52 in Fig. 9) for extracting a display area of the character string displayed on the picture when the content is played.

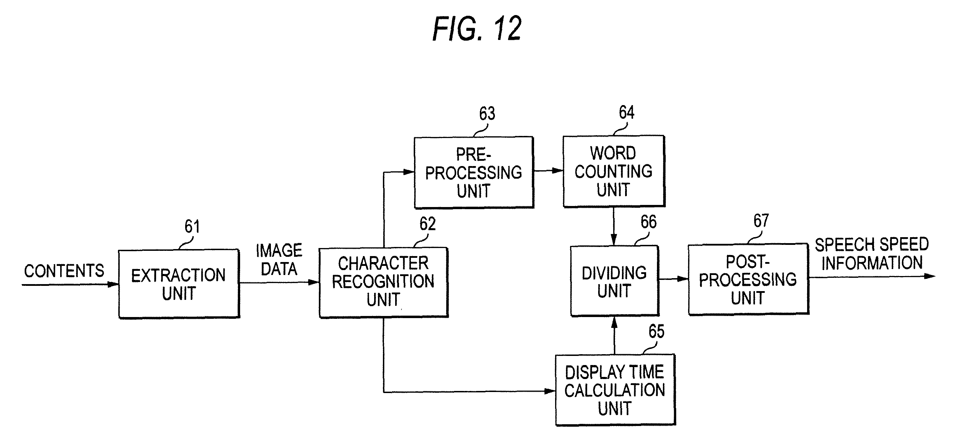

The information processing apparatus can further include a recognition means (for example, a character recognition unit 62 in Fig. 12) for recognizing characters forming the character string displayed on the picture when the content is played by character recognition.

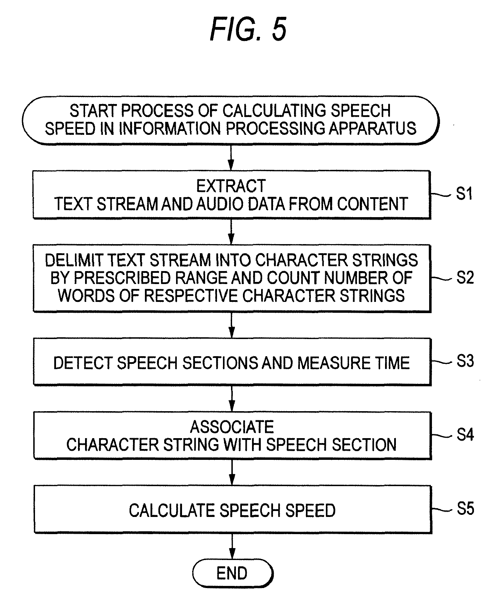

An information processing method or a program product according to an embodiment of the invention includes the steps of counting the number of prescribed parts of the contents of a speech, measuring time of the speech and calculating speed of the speech (for example, step S5 in Fig. 5) based on the counted number of prescribed parts and the measure time of the speech.

Hereinafter, embodiments of the invention will be explained with reference to the drawings.

Fig. 1 is a diagram showing an information processing apparatus according to an embodiment of the invention.

An information processing apparatus 1 is the apparatus in which contents including audio data such as television programs and movies are taken as input, speed of speeches (speech speed) by persons and the like appeared in contents calculated, and speech speed information which is information indicating the calculated speech speed is outputted to the outside.

Contents to be inputted to the information processing apparatus 1 include not only video data and audio data but also text data such as closed caption data used for displaying captions on a picture when a content is played, and speech speed is calculated from the number of words included in a character string displayed on the picture which represents the contents of a speech, and output time of the speech (speech time) which is outputted based on audio data in the information processing apparatus 1.

As described later, speech speed information outputted from the information processing apparatus 1 is used for adding attribute information to inputted contents. Since a part of the content where speech speed is relatively high is considered to be a vigorous part of a subject in the content, attribute information indicating the vigorous part is added, which is referred, for example, when only parts where speech speed are high, namely, when only vigorous parts are played at the time of playback of the content.

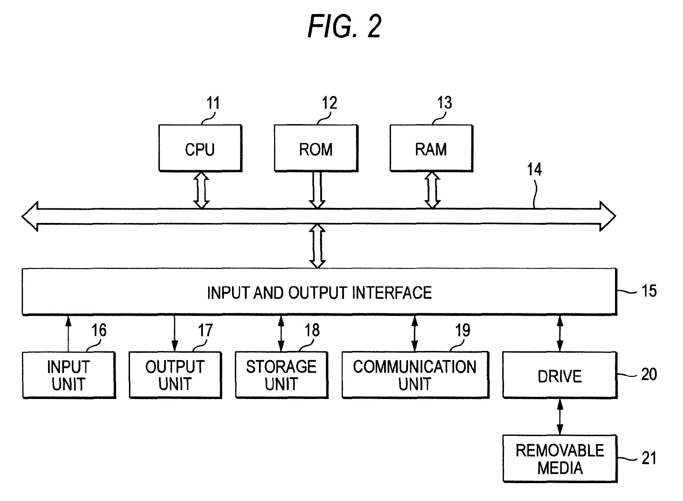

Fig. 2 is a block diagram showing a hardware configuration example of the information processing apparatus 1 of Fig.1.

A CPU (Central Processing Unit) 11 executes various processing in accordance with programs stored in a ROM (Read Only Memory) 12 or a storage unit 18. Programs executed by the CPU 11, data and so on are suitably stored in a RAM (Random Access Memory) 13. The CPU 11, the ROM 12, and the RAM 13 are mutually connected by a bus 14.

An input and output interface 15 is also connected to the CPU 11 through the bus 14. An input unit 16 receiving input of contents and an output unit 17 outputting speech speed information are connected to the input and output interface 15.

The storage unit 18 connected to the input and output interface 15 includes, for example, a hard disc, which stores programs executed by the CPU 11 and various data. A communication unit 19 communicates with external apparatuses through networks such as Internet or local area networks.

A drive 20 connected to the input and output interface 15 drives removable media 21 such as a magnetic disc, an optical disc, an electro-optical disc or a semiconductor memory, when they are mounted thereon, and acquires programs and data stored therein. The acquired programs and data are forwarded to the storage unit 18 and stored therein, if necessary.

Fig. 3 is a block diagram showing a function configuration example of the information processing apparatus 1. At least a part of function units shown in Fig. 3 is realized by designated programs being executed by the CPU 11 of Fig. 2.

In the information processing apparatus 1, for example, an extraction unit 31, a word counting unit 32, a speech time measuring unit 33, a timing control unit 34, and a dividing unit 35 are realized.

The extraction unit 31 extracts a text stream (a line of character strings displayed as captions) and audio data from the supplied content, outputting the extracted text stream to the word counting unit 32 and outputting audio data to the speech time measuring unit 33, respectively.

The word counting unit 32 counts the number of words forming each character string delimited by periods, commas, spaces, line feed positions and the like included in plural character strings supplied from the extraction unit 31 according to control by the timing control unit 34, and outputs the obtained information of the number of words to the dividing unit 35.

The speech time measuring unit 33 measures time of a speech which is spoken by a person appeared in the content at the same timing as the character string is displayed on a picture, number of words of which has been counted by the word counting unit 32 when the content is played, according to control of the timing control unit 34, and outputs speech time information obtained by measurement to the dividing unit 35. For example, spectrum analysis, power analysis and the like are performed with respect to audio data supplied from the extraction unit 31, and a period of a part which is recognized as spoken by a human is measured.

The timing control unit 34 controls timing at which the word counting unit 32 counts the number of words and timing at which the speech time measuring unit 33 measures speech time, so that the number of words of the character string (caption) representing the contents of a speech is counted by the word counting unit 32 as well as time of the same speech is measured by the speech time measuring unit 33. The timing control unit 34 outputs information indicating correspondences between information of the number of words supplied from the word counting unit 32 and information of speech time supplied from the speech time measuring unit 33 to the dividing unit 35, so that speech speed is calculated by using information of the number of words and information of speech time concerning the same speech.

The dividing unit 35 uses information of the number of words and information of speech time associated by the timing control unit 34 in information of the number of words supplied from the word counting unit 32 and information of speech time supplied from the speech time measuring unit 33, and calculates values by dividing the number of words by speech time (for example, on the second time scale) represented by these information as speech speed. The dividing unit 35 outputs speech speed information indicating the calculated speech speed to the outside.

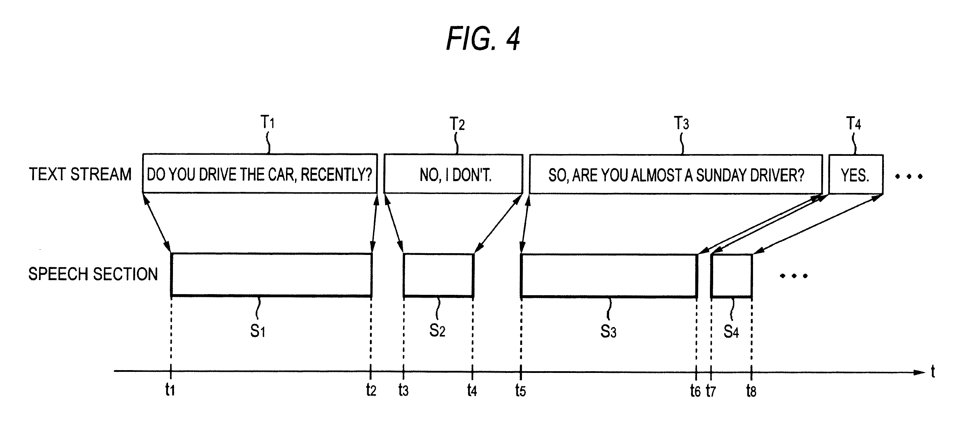

Fig. 4 is a diagram showing an example of speech speed calculation performed in the information processing apparatus 1 of Fig. 3. In Fig. 4, a horizontal direction shows a direction of time.

In the example of Fig. 4, an example of plural character strings displayed as captions, sentences "Do you drive the car, recently? No, I don't. So, are you almost a Sunday driver? Yes...." are shown. When the content is played, sentences "Do you drive the car, recently? No, I don't. So, are you almost a Sunday driver? Yes...." are sequentially displayed on a picture from the left by a character string of the prescribed range.

In the example, as shown surrounded by solid lines, the sentences are respectively delimited into character strings $T_1$ to $T_4$, which are "Do you drive the car, recently?" "No, I don't." "So, are you almost a Sunday driver?" "Yes.". These are delimited based on a character or a mark appeared at ends of sentences, such as a period or a question mark.

In this case, in the word counting unit 32, the numbers of words included in respective character strings of $T_1$ to $T_4$ are counted, and information indicating the number of words is outputted to the dividing unit 35. The number of words in the character string $T_1$ is 6 words, the number of words the character string $T_2$ is 3 words, the number of words in the character string $T_3$ is 7 words, and the number of words in the character string $T_4$ is 1 word".

Also in Fig. 4, a section from a time instant "$t_1$" to a time instant "$t_2$" is a speech section $S_1$, a section from a time instant "$t_3$" to a time instant "$t_4$" is a speech section $S_2$, a section from a time instant "$t_5$" to a time instant "$t_6$" is a speech section $S_3$, and a section from time instant "$t_7$" to a time instant "$t_8$" is a speech section $S_4$.

In this case, in the speech time measuring unit 33, time represented by "$t_2-t_1$" is measured as speech time of the speech section $S_1$, and time represented by "$t_4-t_3$" is measured as speech time of the speech section $S_2$. Further, time represented by "$t_6-t_5$" is measured as speech time of the speech section $S_3$, and time represented by "$t_8-t_7$" is measured as speech time of the speech section $S_4$. Then, information indicating the speech time is outputted to the dividing unit 35.

When these character strings and speech sections are obtained, in the timing control unit 34, for example, the character string (the number of words) and the speech section (speech time) are associated sequentially from the left, based on a head position of the content, and the correspondences are outputted to the dividing unit 35.

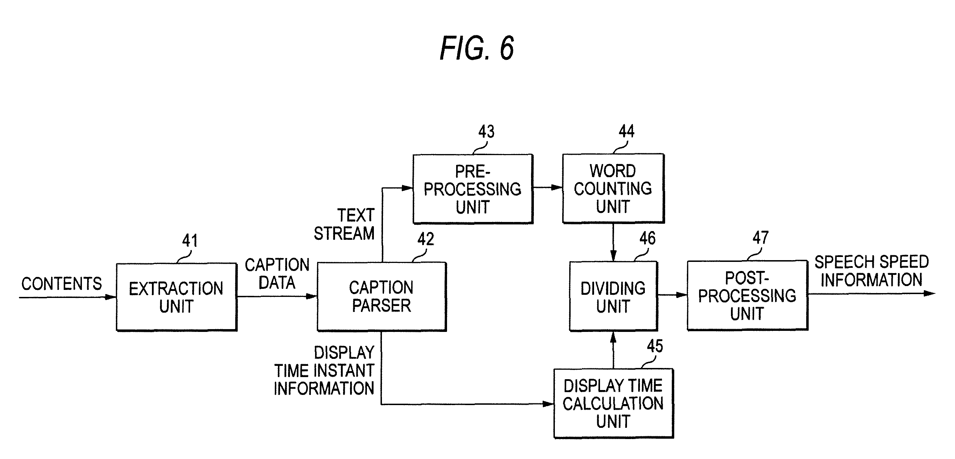

In the example of Fig. 4, 6 words as the number of words of the character string $T_1$ which is the first character string delimited by "?" is associated with the time "$t_2-t_1$" of the speech section $S_1$ which is the first speech section, and 3 words as the number of words of the character string $T_2$ which is the second character string delimited by "." is associated with the time "$t_4-t_3$" of the speech section $S_2$ which is the second speech section.

Further, 7 words as the number of words of the character string $T_3$ which is the third character string delimited by "?" is associated with the time "$t_6-t_5$" of the speech section $S_3$ which is the third speech section, and 1 word as the number of words of the character string $T_4$ which is the fourth character string delimited by "." is associated with the time "$t_8-t_7$" of the speech section $S_4$ which is the fourth speech section.

In the dividing unit 35, speech speed is calculated based on the associated number of words and speech time. The speech speed is represented by the number of words per unit time, and in this case, speech speed of respective speech sections $S_1$ to $S_4$ will be represented by the following equations (1) to (4).

$$\text{Speech speed in the speech section } S_1 = 6/(t_2-t_1)\ldots(1)$$

$$\text{Speech speed in the speech section } S_2 = 3/(t_4-t_3)\ldots(2)$$

$$\text{Speech speed in the speech section } S_3 = 7/(t_6-t_5)\ldots(3)$$

$$\text{Speech speed in the speech section } S_4 = 1/(t_8-t_7)\ldots(4)$$

With reference to a flowchart of Fig. 5, the process of the information processing apparatus 1 which calculates speech speed as described above will be explained.

In step S1, the extraction unit 31 extracts a text stream and audio data from the supplied content, outputting the extracted text stream to the word counting unit 32 and outputting the audio data to the speech time measuring unit 33, respectively.

In step S2, the word counting unit 32 delimits the whole character string supplied from the extraction unit 31 into character strings by the prescribed range, counting the number of words of each character string. The word counting unit 32 outputs information of the obtained number of words to the dividing unit 35.

In step S3, the speech time measuring unit 33 detects speech sections by analyzing audio data supplied from the extraction unit 31, and measures time thereof.

In step S4, the timing control unit 34 associates character strings (the number of words) with speech sections (speech time), which are used for speech calculation, and outputs information indicating correspondences between information of the number of words supplied from the word counting unit 32 and information of speech time supplied from the speech time counting unit 33 to the dividing unit 35.

In Step S5, the dividing unit 35 calculates, for example, the number of words per unit time as speech speed as described above by using information of the number of words and information of speech time associated by the timing control unit 34. The dividing unit 35 outputs speech speed information indicating the calculated speech speed to the outside to end the process.

As described above, speech speed is calculated based on the number of words and speech time displayed on a picture as captions when the content is played, therefore, speech speed can be calculated easily and relatively accurately, as compared with a case in which speech speed is calculated by using character strings and the like obtained by speech recognition. In order to obtain the correct character string representing the contents of a speech by the speech recognition, it is necessary to recognize at least syllables of the speech. However, in the information processing apparatus 1, the number of words displayed on the picture when the content is played is merely counted and used for calculation of speech speed, and therefore, a complicated process is not necessary.

In the above case, speech time is calculated by analyzing audio data, and used for calculation of speech speed, however, in the case, such as such as closed caption data, that not only text data of respective character strings displayed as captions but also information including information of display time instants of respective character strings is added to the content, it is also preferable that speech time is calculated from information of display time instants and the calculated speech time is used for calculation of speech speed. In such case, time during which the character string is displayed will be regarded as speech time.

Fig. 6 is a block diagram showing a function configuration example of the information processing apparatus 1 in which speech speed is calculated by using information of display time instants.

In the information processing apparatus 1 of Fig. 6, for example, an extraction unit 41, a caption parser 42, a pre-processing unit 43, a word counting unit 44, a display time calculation unit 45, a dividing unit 46 and a post-processing unit 47 are realized.

The extraction unit 41 extracts caption data (closed caption data) from the supplied content and outputs the extracted caption data to the caption parser 42. The caption data includes text data of character strings displayed as captions when the content is played, and information of display time instants of respective character strings (display time instant information). According to the display time instant information, which character string is displayed at which time instant is represented based on a certain time instant in the whole content.

The caption parser 42 extracts a text stream and display time instant information from caption data supplied from the extraction unit 41, outputting the extracted text stream to the pre-processing unit 43 and outputting the display time instant information to the display time calculation unit 45, respectively.

The pre-processing unit 43 performs pre-processing with respect to character strings included in the text stream supplied from the caption parser 42 and outputs respective character strings to the word counting unit 44, which have been obtained by performing the processing.

As pre-processing, for example, marks or characters representing names of speech persons and the like which are not spoken by persons at the time of playback of the content are eliminated. When the content is played, names of speech persons are often displayed at the head position of the captions displayed on a picture, and such names are characters not spoken by persons. Accordingly, it becomes possible to count only the number of words representing the contents of a speech in a later step, which are actually outputted as audio, as a result, accuracy of speech speed to be calculated can be improved.

The word counting unit 44 counts the number of words included in each character string supplied from the pre-processing unit 43, and outputs the obtained information of the number of words to the dividing unit 46.

The display time calculation unit 45 calculates speech time of persons in the content based on the display time instant information supplied from the caption parser 42 and outputs the calculated information of speech time to the dividing unit 46. In this case, time during which the character string is displayed is regarded as time during which persons speak, therefore, time from a display time instant of the first character string to a display time instant of the second character string which is sequentially displayed (the difference between display time instants of the first and second character strings) is calculated as display time of the first character string.

The dividing unit 46 calculates values by dividing the number of words by speech time as speech speed of respective speeches, based on information of the number of words supplied from the word counting unit 44 and information of speech time supplied from the display time calculation unit 45. The dividing unit 46 outputs speech speed information indicating calculated speech speed to the post-processing unit 47.

The post-processing unit 47 appropriately performs post-processing with respect to the speech speed information supplied from the dividing unit 46 and outputs speech speed information to the outside, which is obtained by performing the processing. As post-processing, for example, an average of the prescribed number of speech speeds is calculated.

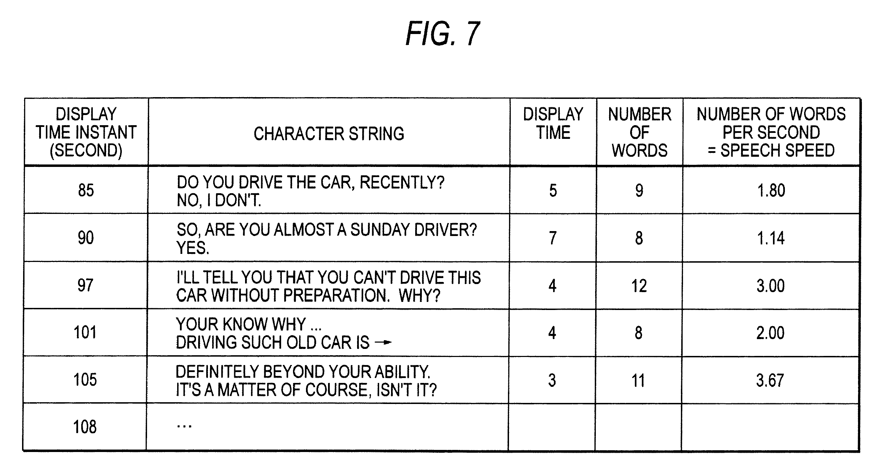

Fig. 7 is a chart showing an example of information included in caption data and an example of calculated results of speech speed calculated based on the included information.

In the example of Fig. 7, the character strings "Do you drive the car, recently? No, I don't." "So, are you almost a Sunday driver? Yes." "I'll tell you that you can' t drive this car without preparation. Why?" and so on are shown.

Based on a certain time instant such as the head position of the content, "Do you drive the car, recently?" which is the first character string will be displayed at a time instant when 85 seconds have passed, "So, are you almost a Sunday driver? Yes." which is the second character string will be displayed at a time instant when 90 seconds have passed, "I'll tell you that you can't drive this car without preparation. Why?" which is the third character string will be displayed at a time instant when 97 seconds have passed.

The above information (information of text data of character strings and information of display time instants) is included in caption data, and information of character strings is supplied to the pre-processing unit 43 and information of display time instants is supplied to the display time calculation unit 45 by the caption parser 42, respectively.

In the case that character strings and display time instants are ones as described above, as shown in Fig. 7, display time of the first character string is 5 seconds which is the difference between a display time instant of the first character string and a display time instant of the second character string, and display time of the second character string is 7 seconds which is the difference between the display time instant of the second character string and a display time instant of third character string. Display time of the third character string is 4 seconds which is the difference between the display time instant of third character string and a display time instant of the fourth character string ("You know why...."). These display times are calculated by the display time calculation unit 45.

As shown in Fig. 7, the number of words of the first character string is 9 words and the number of words of the second character string is 8 words and the number of words of the third character strings is 12 words. The numbers of words are found by the word counting unit 44.

Furthermore, as shown in Fig. 7, a speed of a speech corresponding to the first character string (speech representing the contents by the first character string) is 1.80 (the number of words/display time (second)), and a speed of a speech corresponding to the second character string is 1.14. Further, speech of a speech corresponding to the third character string is 3.00. These speech speeds are calculated by the dividing unit 46.

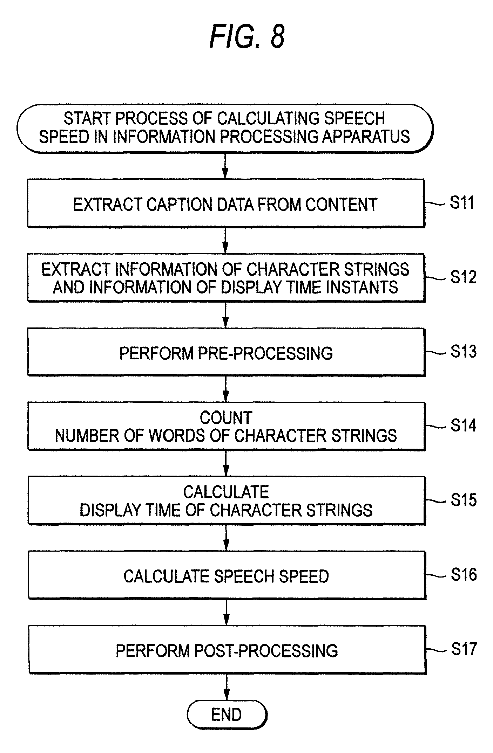

With reference to a flowchart of Fig. 8, the process of the information processing apparatus 1 of Fig. 6 which calculates speech speed as described above will be explained.

In step S11, the extraction unit 41 extracts caption data from the supplied content and outputs the extracted caption data to the caption parser 42.

In step S12, the caption parser 42 extracts a text stream and display time instant information from the caption data supplied from the extraction unit 41, outputting the extracted text stream to the pre-processing unit 43 and outputting display time instants information to the display time calculation unit 45, respectively.

In step S13, the pre-processing unit 43 performs pre-processing with respect to character strings included in the text stream supplied from the caption parser 42, and output respective character strings to the word counting unit 44, which have been obtained by performing the processing.

In step S14, the word counting unit 44 counts the number of words included in each character string supplied from the pre-processing unit 43 and outputs information of the number of words to the dividing unit 46.

In step S15, the display time calculation unit 45 calculates speech time of persons in the content based on the display time information supplied from the caption parser 42, regarding display time of each character string as speech time. The display time calculation unit 45 outputs the calculated speech time information to the dividing unit 46.

In step S16, the dividing unit 46 calculates values by dividing the number of words by speech time as speech speed based on information of the number of words supplied from the word counting unit 44 and information of speech time supplied from the display time calculation unit 45. The dividing unit 46 outputs the calculated speech speed information to the post-processing unit 47.

In step S17, the post-processing unit 47 appropriately performs post-processing with respect to the speech speed information supplied from the dividing unit 46 and outputs speech speed information to the outside, which is obtained by performing the processing. After that, the process ends.

Also according to the above process, speech speed can be calculated easily and accurately, as compared with the case in which speech speed is calculated by using character strings and the like obtained by speech recognition.

In the above description, speech times are calculated by analyzing audio data, or from information of display time instants of respective character strings included in caption data, which are used for calculation of speech speed. However, it is also preferable that speech time is calculated from images displayed when the content is played, not from audio data or display time information, which is used for calculation of speech speed.

Fig. 9 is a block diagram showing a function configuration example of the information processing apparatus 1 which calculates speech speed from images.

In the information processing apparatus 1 of Fig. 9, for example, an extraction unit 51, a character area extraction unit 52, a word counting unit 53, a display time calculation unit 54, a dividing unit 55, and a post-processing unit 56 are realized.

The extraction unit 51 extracts image data from the supplied content and outputs the extracted image data to the character area extraction unit 52.

The character area extraction unit 52 extracts a display area of captions displayed in a band, for example, at a lower part of each picture based on image data supplied from the extraction unit 51 and outputs the image data in the extracted display area to the word counting unit 53 and the display time calculation unit 54.

The word counting unit 53 detects respective areas of words displayed in the display area by detecting spaces and the like between words in image data in the display area of captions supplied from the character area extraction unit 52, and counts the number of detected word areas as the number of words of a character string. The word counting unit 53 outputs information of the number of words to the diving unit 55.

For detection of the display area of captions by the character area extraction unit 52 and detection of word areas by the word counting unit 53, it is possible to detect them by using spaces and the like, however, it can be also considered that word areas are recognized by recognizing characters, using, for example, a technique applied to OCR (Optical Character Reader) software. In general, in the OCR software, character areas are extracted from images which have been optically taken in, and characters included in respective areas are recognized.

The display time calculation unit 54 detects changing points of the display contents (character strings) in the display area by analyzing image data in the display area of captions supplied from the character area extraction unit 52, and calculates time between the detected changing points as speech time. Specifically, time during which a certain character string is displayed at the caption display area is a speech time during which the contents are represented by the character string also in this case, however, the display time is calculated from images, not from information of display time instants of character strings included in caption data. The display time calculation unit 54 outputs calculated speech time information to the dividing unit 55.

The dividing unit 55 calculates values by dividing the number of words by speech time as speech speed based on information of the number of words supplied from the word counting unit 53 and information of speech time supplied from the display time calculation unit 54. The dividing unit 55 outputs speech speed information indicating the calculated speech speed to the post-processing unit 56.

The post-processing unit 56 appropriately performs post-processing with respect to speech speed information supplied from the dividing unit 55, and outputs speech speed information to the outside, which is obtained by performing the processing. As post-processing, for example, an average of the prescribed number of speech speeds is calculated.

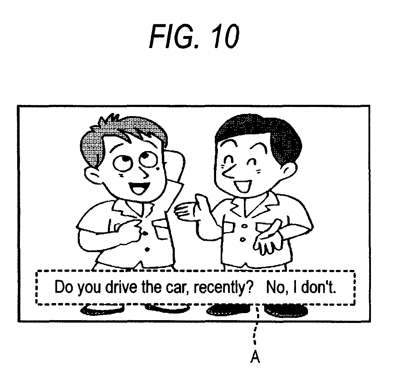

Fig. 10 is a view showing an example of an image displayed when the content is played.

When the image shown in Fig. 10 is a process target, an area "A" displayed in a band at the lower part thereof is extracted by the character area extraction unit 52. In the example of Fig. 10, a caption (a character string) "Do you drive the car, recently? No, I don't." is displayed at the area "A".

In the word counting unit 53, areas of respective characters are detected by image processing such as an area of "D", an area of "o", an area of " " (space area), an area of "y" and so on, and a value in which "1" is added to the number of detected " " (space areas) is calculated as the number of words. From the image data of the area "A" of Fig. 10, the number of words is detected as 9 words.

In the display time calculation unit 54, a time during which the character string "Do you drive the car, recently? No. I don't." of Fig. 10 is displayed at the area A is calculated as speech time.

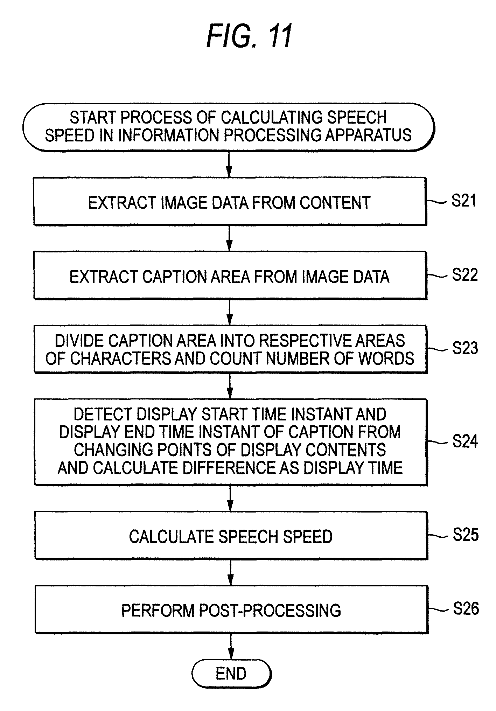

The process of the information processing apparatus 1 of Fig. 9 which calculates speech speed as described above will be explained with reference to a flowchart of Fig. 11.

In step S21, the extraction unit 51 extracts image data from the supplied content and outputs the extracted image data to the character area extraction unit 52.

In step S22, the character area extraction unit 52 extracts a display area of captions from the image data supplied from the extraction unit 51 and outputs the extracted image data in the display area to the word counting unit 53 and to the display time calculation unit 54.

In step S23, the word counting unit 53 divides the whole display area of captions supplied from the character area extraction unit 52 into respective areas of characters and counts the number of spaces in the divided character areas, and calculate a value in which "1" is added to the number of spaces as the number of words of the character string. The word counting unit 53 outputs the obtained information of the number of words to the dividing unit 55.

In step S24, the display time calculation unit 54 detects changing points of the display contents in the display area of captions supplied from the character area extraction unit 52, and calculates time between the detected changing points, that is, the difference between a display-start time instant and a display-end time instant as speech time. The display time calculation unit 54 outputs the calculated speech time information to the dividing unit 55.

In step S25, the dividing unit 55 calculates speech speed based on information of the number of words supplied from the word counting unit 53 and information of speech time supplied from the display time calculation unit 54, and outputs the calculated speech speed information indicating the calculated speech speed to the post-processing unit 56.

In step S26, the post-processing unit 56 appropriately performs post-processing with respect to the speech speed information supplied from the dividing unit 55, and outputs the speech speed information to the outside, which is obtained by performing the processing. After that, the process ends.

According to the above process, speech speed can be calculated from images without using audio data or information of display time instants of character strings. Therefore, even in the case when character strings displayed as captions are not prepared as text data, for example, in the case when the content in which captions are displayed by open captions is targeted, speech speed can be calculated.

In addition, information of the number of words and information of speech time (display time of the character string) used for calculation of speech speed can be obtained only by detecting that characters are displayed without recognizing the contents of characters, therefore, speech speed can be calculated easily and accurately. In the case of pictures of a television program and the like, there are backgrounds (filmed ranges) around the character strings displayed as captions, and the backgrounds of the character strings are complicated in many cases, therefore, recognition accuracy of characters is not so excellent. However, recognition (detection) of the fact that characters are displayed may be accomplished relatively accurately.

Fig. 12 is a block diagram showing another function configuration example of the information processing apparatus 1 which calculates speech speed from images.

In the information processing apparatus 1 of Fig. 12, for example, an extraction unit 61, a character recognition unit 62, a pre-processing unit 63, a word counting unit 64, a display time calculation unit 65, a dividing unit 66 and a post-processing unit 67 are realized.

The extraction unit 61 extracts image data from the supplied content and outputs the extracted image data to the character recognition unit 62.

The character recognition unit 62 extracts a display area of captions displayed in a band, for example, at a lower part of each picture based on the image data supplied from the extraction unit 61 and recognizes character strings by analyzing the image data in the extracted display area. That is to say, it is different from the information processing apparatus 1 of Fig. 9 in a point that the character recognition unit 62 also recognizes the contents of displayed characters. The character recognition unit 62 outputs the recognized character strings to the pre-processing unit 63 and the display time calculation unit 65.

The pre-processing unit 63 performs pre-processing with respect to the character strings supplied from the character recognition unit 62, and outputs respective character strings to the word counting unit 64, which are obtained by performing the processing. As the pre-processing, for example, marks or characters representing names of speech persons and the like which are not spoken by persons at the time of playback of the content are eliminated as described above.

The word counting unit 64 counts the number of words included in each character strings supplied from the pre-processing unit 63 and outputs information of the obtained number of words to the dividing unit 66.

The display time calculation unit 65 detects changing points of the contents of character strings based on the character strings supplied from the character recognition unit 62, and calculates time between the detected changing points as speech time. The display time calculation unit 65 outputs the calculated speech time information to the dividing unit 66. Also in this case, time during which the character string is displayed is regarded as time during which persons speak.

The dividing unit 66 calculates values as speech speed by dividing the number of words by speech time based on information of the number of words supplied from the word counting unit 64 and information of speech time supplied from the display time calculation unit 65. The dividing unit 66 outputs speech speed information indicating the calculated speech speed to the post-processing unit 67.

The post-processing unit 67 appropriately performs post-processing with respect to the speech speed information supplied from the dividing unit 66 and outputs speech speed information to the outside, which is obtained by performing the processing. As described above, for example, an average of the prescribed number of speech speeds is calculated as the post-processing.

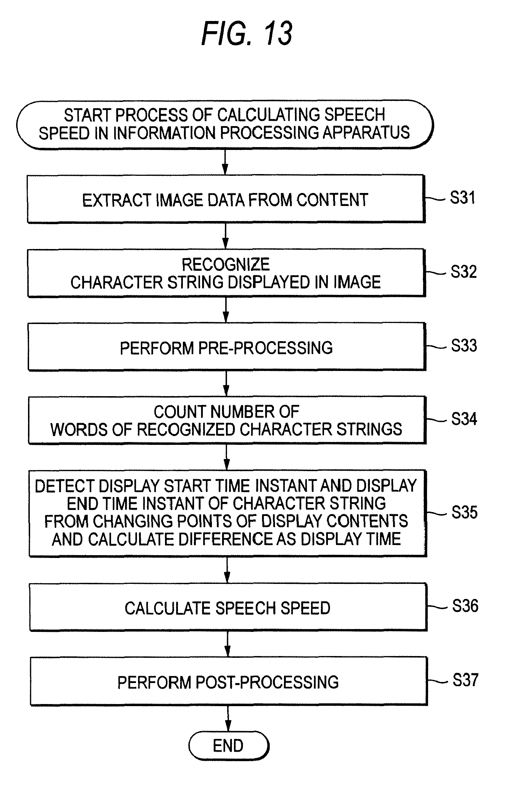

The process of the information processing apparatus 1 of Fig. 12 which calculates speech speed as described above will be explained with reference to a flowchart of Fig. 13.

In step S31, the extraction unit 61 extracts image data from the supplied content and outputs the extracted image data to the character recognition unit 62.

In step S32, the character recognition unit 62 extracts a display area of captions displayed at each picture based on the image data supplied from the extraction unit 61 and recognizes character strings by analyzing the image data in the extracted display area. The character recognition unit 62 outputs text data of the recognized character strings to the pre-processing unit 63 and to the display time calculation unit 65.

In step S33, the pre-processing unit 63 performs pre-processing with respect to the character strings supplied from the character recognition unit 62, and outputs respective character strings to the word counting unit 64, which are obtained by performing the processing.

In step S34, the word counting unit 64 counts the number of words included each character string supplied from the pre-processing unit 63 and outputs information of the obtained number of words to the dividing unit 66.

In step S35, the display time calculation unit 65 detects changing points of the display contents based on the character strings supplied from the character recognition unit 62, and calculates time between the detected changing points , that is, the difference between a display-start time instant and a display-end time instant of captions as speech time. The display time calculation unit 65 outputs the calculated speech time information to the dividing unit 66.

In step S36, the diving unit 66 calculates values as speech speed by dividing the number of words by speech time based on information of the number of words supplied from the word counting unit 64 and information of speech time supplied from the display time calculation unit 65. The dividing unit 66 outputs the calculated speech speed information to the post-processing unit 67.

In step S37, the post-processing unit 67 appropriately performs post-processing with respect to the speech speed information supplied from the dividing unit 66 and outputs speech speed information to the outside, which is obtained by performing the processing. After that, the process ends.

Also according to the above process, speech speed can be calculated from images.

In the above description, when there is not display time information of character strings, speech time is calculated by analyzing audio data (for example, Fig. 3), or by regarding time during which a character string is displayed as speech time (for example, Fig. 9, Fig. 12). It is also preferable to calculate speech time more accurately by using speech time obtained by analyzing audio data and speech time obtained from time during which the character string is displayed. Calculation of accurate speech time makes it possible to calculate more accurate speech speed.

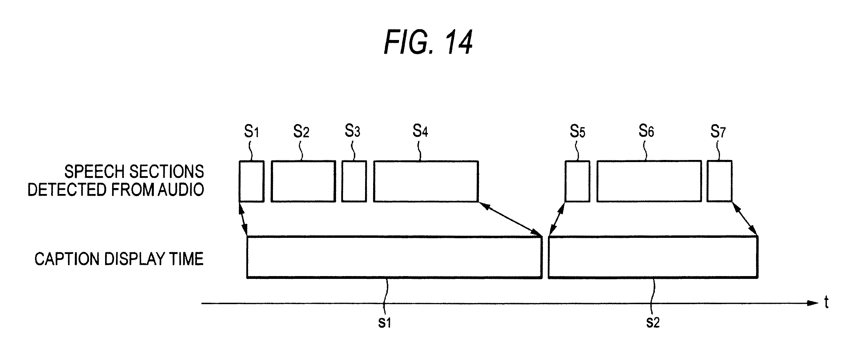

Fig. 14 is a diagram showing examples of speech times obtained by analyzing audio data and speech times obtained from time during which the character strings are displayed.

In the example of Fig. 14, speech times $S_1$ to $S_7$ which are speech times detected by analyzing audio data and speech times $s_1$ and $s_2$ which are speech times detected from times during which character strings are displayed.

In this case, as shown in Fig. 14, the speech times $S_1$ to $S_4$ are associated with the speech time $s_1$, and the speech times $S_5$ to $S_7$ are associated with the speech time $s_2$, respectively. The association is performed based on order relation of detected times, the differences between the detected times or the like (for example, in Fig. 14, time from a start time instant of the speech time $S_1$ to an end time instant of the speech time $S_4$ in which speech times having shorter times than a threshold value in-between are integrated has little difference from the speech time $s_1$, and both the integrated time from the speech time $S_1$ to the speech time $S_4$ and the speech time $s_1$ are detected as the first speech time, accordingly, they are associated. Similarly, time from a start time instant of the speech time $S_5$ to an end time instant of speech time $S_7$ in which speech times having shorter times than a threshold value in-between are integrated has little difference from the speech time $s_2$, and both the integrated time from the speech time $S_5$ to the speech time $S_7$ and the speech time $s_2$ are detected as the second speech time, accordingly, they are associated).

In the case that the association is performed in the way as shown in Fig. 14, an average of the integrated time of speech times $S_1$ to $S_4$ and the speech time $s_1$ is calculated as one speech time, and an average of the integrated time of speech times $S_5$ to $S_7$ and the speech time $s_2$ is calculated as one speech time. The calculated speech times are used for calculation of speech speed with the numbers of words of character strings displayed at these times.

Next, generation of attribute information based on speech speed information generated as described above will be explained. The generated attribute information is added to the content, and used such as when the content is played.

Fig. 15 is a block diagram showing a function configuration example of an information processing apparatus 101.

The information processing apparatus 101 includes the hardware configuration of Fig. 2 in the same way as the above information processing apparatus 1. In the information processing apparatus 101, an information processing unit 111 and an attribute information generating unit 112 are realized as shown in Fig. 15 by prescribed programs being executed by a CPU 11 of the information processing apparatus 101.

The information processing unit 111 takes contents including audio data such as television programs or movies as input, calculates speed of speeches by persons appeared in contents and outputs speech speed information indicating the calculated speech speed to the attribute information generating unit 112. That is, the information processing unit 111 has the same configuration as ones shown in any of Fig. 3, Fig. 6. Fig. 9 and Fig. 12, which calculates speech speed in the manner as described above.

The attribute information generating unit 112 generates attribute information based on the speech speed information supplied from the information processing unit 111, and adds the generated attribute information to the content inputted from the outside. In the attribute information generating unit 112, for example, a part of the content where a speech speed higher than a value to be a threshold value is calculated is detected as a part where a subject of the content is vigorous, and information of a start time instant and an end time instant of that part is generated as attribute information.

For example, in the case that the content to be processed is a talk-show content, a part where the speech speed of persons becomes high is a part such as where the discussion heats up, and it is considered that such part is a part where a subject is vigorous as the talk show. When the content to be processed is a drama content, a part where the speech speed of persons becomes high is a part such as where dialogues are energetically exchanged, and it is considered that such part is a part where a subject is vigorous as the drama.

The content to which attribute information generated by the attribute information generating unit 112 is added is outputted to the outside, and played at prescribed timing. When the content is played, the attribute information generated by the attribute information generating unit 112 is referred by a playback device for contents, and for example, only vigorous parts designated by start time instants and end time instants are played. It is also preferable that only the vigorous parts designated by start time instants and end time instants are recorded in removable media or outputted to external equipment such as a portable player.

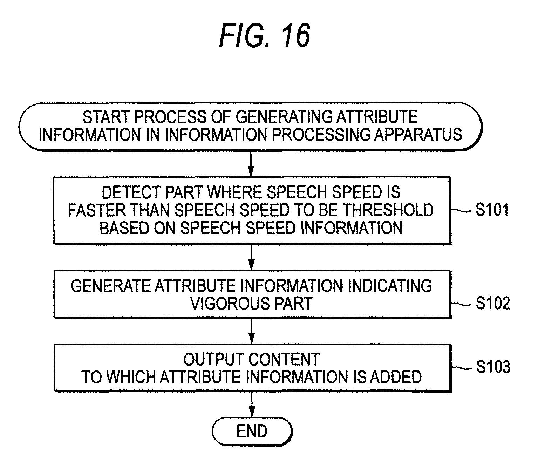

The process of generating attribute information of the information processing apparatus 101 of Fig. 15 will be explained with reference to a flowchart of Fig. 16. The process is started, for example, when the process explained with reference to Fig. 5, Fig. 8, Fig. 11 and Fig. 13 are performed by the information processing apparatus 111 and speech speed information is supplied to the attribute information generating unit 112.

In step S101, the attribute information generating unit 112 detects a part of the content where a speech speed higher than a value to be a threshold value is calculated based on speech speed information supplied from the information processing apparatus 111.

In step S102, the attribute information generating unit 112 generates information of a start time instant and an end time instant of the part detected in the step S101 as attribute information, then, the process proceeds to step S103, where the attribute information is added to the content to be outputted to the outside.

According to the above, it is possible to allow the external playback devices to play back only vigorous parts of the content.

In this case, speech speed calculated according to the above is used for detecting the vigorous part of the content, however, the application it not limited to this.

In the above description, speech speed is represented by the number of words per unit time, however, speech speed can be represented in any way if it is represented by using at least the number of words and speech time of character strings. The speech speed can be represented not only by the number of words but also by the number of characters per unit time, using the number of characters. In addition, when closed caption information is provided by caption data, the contents of a speech can be found with high accuracy, the number of syllables and the number of phonemes can be detected. In this case, it is also preferable that speech speed is represented by the number of syllables or the number of phonemes per unit time, providing with a syllable counting unit detecting syllables or a phoneme counting unit, instead of the word counting unit.

Also in the above description, contents to be inputted to the information processing apparatus 1 (information processing apparatus 101) are contents such as television programs or movies, however, it is also preferable that the contents are not only ones to be broadcasted but also packaged contents such as in DVD and the like.

The above series of processing can be executed by hardware, as well as by software. When the series of processing is executed by software, programs included in the software are installed from program recording media in a computer incorporated in dedicated hardware, or for example, in a general-purpose computer which is capable of executing various functions by installing various programs.

The program recording media storing programs to be installed in the computer and allowed to be a state executed by the computer includes, as shown in Fig. 2, the removable media 21 which are package media such as the magnetic disc (including a flexible disc), the optical disc (including a CD-ROM (Compact Disc-Read Only Memory), a DVD (Digital Versatile Disc)), an electro-optical disc or a semiconductor memory, the ROM 12 in which programs are stored temporarily or permanently, and hard disc forming the storage unit 18 and the like. Storage of programs to the program recording media is performed by using wired or wireless communication media such as a local area network, Internet, or digital satellite broadcasting through the communication unit 19 as the interface such as a router, and a modem, in case of necessity.

In the specification, the steps of describing programs include not only processing performed in time series along the written order but also include processing not always performed in time series but executed in parallel or individually.

According to an embodiment of the invention, speech speed can be calculated easily.

It should be understood by those skilled in the art that various modifications, combinations, sub-combinations and alterations may occur depending on design requirements and other factors insofar as they are within the scope of the appended claims or the equivalents thereof.

**Claims**

1. An information processing apparatus, comprising:

   a counting means (32) for counting the number of prescribed parts of the contents of a speech;
   a speech time measuring means (23) for measuring time of the speech; and
   a calculating means (35) for calculating speed of the speech based on the number of the prescribed parts counted by the counting means(32) and time of the speech measured by the speech time measuring means (33).

2. The information processing apparatus according to claim 1,
   wherein the prescribed parts of the contents of the speech are the number of a selected one of the group comprising words corresponding to a character string, characters included in a character string, syllables corresponding to a character string, phonemes corresponding to a character string, the character string representing the contents of the speech.

3. The information processing apparatus according to claim 2,
   wherein the prescribed parts being the number of words the calculating means calculates a value represented by the number of words per unit time as the speed of the speech.

4. The information processing apparatus according to claim 2 or 3,
   wherein the character string is displayed (A) on a picture when a content is played, and the speech is audio outputted so as to correspond to display of the character string.

**5.** The information processing apparatus according to claim 4, further comprising:

a detecting means for detecting a section of the content where a speech speed calculated by the calculating means is higher than a prescribed speed as a vigorous section of a subject.

**6.** The information processing apparatus according to anyone of claims 2 to 5, further comprising:

an extraction means (51) for extracting information of character strings and audio information included in contents; and

a control means for associating a character string to be a target for counting the number of the prescribed parts with a speech to be a target for measuring the speech time, which are used for calculation of the speech speed, in plural character strings whose information is extracted by the extraction means and plural speeches outputted based on the extracted audio information.

**7.** The information processing apparatus according to anyone of claims 2 to 6, wherein the speech time measuring means (33) measures time of the speeches based on information of display time instants of respective character strings included in a content.

**8.** The information processing apparatus according to anyone of claims 2 to 7, further comprising:

an area extraction means (52) for extracting a display area (A) of the character string displayed on a picture when a content is played, and

wherein the counting means (32) counts the number of the prescribed parts based on an image of the area extracted by the area extraction means.

**9.** The information processing apparatus according to claim 8, wherein the speech time measuring means (33) measures time during which the character string is displayed at the area (A) extracted by the area extraction means (52) as the speech time.

**10.** The information processing apparatus according to claim 1, further comprising:

a recognition means (63) for recognizing characters included in the character string displayed (A) on a picture when a content is played by character recognition, and

wherein the counting means (32) counts the number of syllables or the number of phonemes corresponding to characters recognized by the recognition means.

**11.** An information processing method, comprising the steps of:

counting (32) the number of prescribed parts of the contents of a speech;
measuring (32) time of the speech; and
calculating (35) speed of the speech based on the counted number of the prescribed parts and the measured time of the speech.

**12.** A program product which allows a computer to execute processing including the steps of:

counting (32) the number of prescribed parts of the contents of a speech;
measuring time of the speech; and
calculating (35) speed of the speech based on the counted number of the prescribed parts and the measured time of the speech.

# FIG. 1

CONTENTS →

1

INFORMATION
PROCESSING APPARATUS

SPEECH SPEED
INFORMATION →

# FIG. 2

# FIG. 3

```
                              32
                        ┌──────────┐
                        │   WORD   │
            TEXT        │ COUNTING │
           STREAM   31  │   UNIT   │
                        └──────────┘
                    ┌────────────┐    34           35
CONTENTS    ┌──────────┐    ┌──────────┐    ┌──────────┐   SPEECH SPEED
  ──────▶   │EXTRACTION│    │  TIMING  │    │ DIVIDING │   INFORMATION
            │   UNIT   │    │ CONTROL  │    │   UNIT   │   ──────▶
            └──────────┘    │   UNIT   │    └──────────┘
                            └──────────┘
            AUDIO                   33
            DATA        ┌──────────┐
                        │  SPEECH TIME │
                        │  MEASURING   │
                        │    UNIT      │
                        └──────────┘
```

## FIG. 4

TEXT STREAM — T1: DO YOU DRIVE THE CAR, RECENTLY? | T2: NO, I DON'T. | T3: SO, ARE YOU ALMOST A SUNDAY DRIVER? | T4: YES. · · ·

SPEECH SECTION — S1, S2, S3, S4 · · ·

t1, t2, t3, t4, t5, t6, t7, t8 → t

EP 1 818 936 A1

# FIG. 5

```
┌──────────────────────────────────────────────┐
│   START PROCESS OF CALCULATING SPEECH         │
│  SPEED IN INFORMATION PROCESSING APPARATUS    │
└──────────────────────────────────────────────┘
                      │
                      ▼
┌──────────────────────────────────────────────┐
│               EXTRACT                         │  ～ S1
│  TEXT STREAM AND AUDIO DATA FROM CONTENT      │
└──────────────────────────────────────────────┘
                      │
                      ▼
┌──────────────────────────────────────────────┐
│  DELIMIT TEXT STREAM INTO CHARACTER STRINGS   │
│  BY PRESCRIBED RANGE AND COUNT NUMBER OF      │  ～ S2
│  WORDS OF RESPECTIVE CHARACTER STRINGS        │
└──────────────────────────────────────────────┘
                      │
                      ▼
┌──────────────────────────────────────────────┐
│   DETECT SPEECH SECTIONS AND MEASURE TIME     │  ～ S3
└──────────────────────────────────────────────┘
                      │
                      ▼
┌──────────────────────────────────────────────┐
│              ASSOCIATE                        │  ～ S4
│  CHARACTER STRING WITH SPEECH SECTION         │
└──────────────────────────────────────────────┘
                      │
                      ▼
┌──────────────────────────────────────────────┐
│          CALCULATE SPEECH SPEED               │  ～ S5
└──────────────────────────────────────────────┘
                      │
                      ▼
               ┌─────────────┐
               │     END     │
               └─────────────┘
```

EP 1 818 936 A1

## FIG. 6

## FIG. 7

| DISPLAY TIME INSTANT (SECOND) | CHARACTER STRING | DISPLAY TIME | NUMBER OF WORDS | NUMBER OF WORDS PER SECOND = SPEECH SPEED |
|---|---|---|---|---|
| 85 | DO YOU DRIVE THE CAR, RECENTLY? NO, I DON'T. | 5 | 9 | 1.80 |
| 90 | SO, ARE YOU ALMOST A SUNDAY DRIVER? YES. | 7 | 8 | 1.14 |
| 97 | I'LL TELL YOU THAT YOU CAN'T DRIVE THIS CAR WITHOUT PREPARATION. WHY? | 4 | 12 | 3.00 |
| 101 | YOUR KNOW WHY ... DRIVING SUCH OLD CAR IS → | 4 | 8 | 2.00 |
| 105 | DEFINITELY BEYOND YOUR ABILITY. IT'S A MATTER OF COURSE, ISN'T IT? | 3 | 11 | 3.67 |
| 108 | ... | | | |

EP 1 818 936 A1

# FIG. 8

```
      ┌─────────────────────────────────────────┐
      │  START PROCESS OF CALCULATING SPEECH     │
      │ SPEED IN INFORMATION PROCESSING APPARATUS│
      └─────────────────────────────────────────┘
                          │
                          ▼
      ┌─────────────────────────────────────────┐
      │   EXTRACT CAPTION DATA FROM CONTENT       │── S11
      └─────────────────────────────────────────┘
                          │
                          ▼
      ┌─────────────────────────────────────────┐
      │ EXTRACT INFORMATION OF CHARACTER STRINGS  │── S12
      │ AND INFORMATION OF DISPLAY TIME INSTANTS  │
      └─────────────────────────────────────────┘
                          │
                          ▼
      ┌─────────────────────────────────────────┐
      │         PERFORM PRE-PROCESSING            │── S13
      └─────────────────────────────────────────┘
                          │
                          ▼
      ┌─────────────────────────────────────────┐
      │              COUNT                        │── S14
      │   NUMBER OF WORDS OF CHARACTER STRINGS     │
      └─────────────────────────────────────────┘
                          │
                          ▼
      ┌─────────────────────────────────────────┐
      │            CALCULATE                      │── S15
      │   DISPLAY TIME OF CHARACTER STRINGS        │
      └─────────────────────────────────────────┘
                          │
                          ▼
      ┌─────────────────────────────────────────┐
      │        CALCULATE SPEECH SPEED             │── S16
      └─────────────────────────────────────────┘
                          │
                          ▼
      ┌─────────────────────────────────────────┐
      │        PERFORM POST-PROCESSING            │── S17
      └─────────────────────────────────────────┘
                          │
                          ▼
                      ┌───────┐
                      │  END  │
                      └───────┘
```

## FIG. 9

## FIG. 10

# FIG. 11

START PROCESS OF CALCULATING SPEECH
SPEED IN INFORMATION PROCESSING APPARATUS

EXTRACT IMAGE DATA FROM CONTENT — S21

EXTRACT CAPTION AREA FROM IMAGE DATA — S22

DIVIDE CAPTION AREA INTO RESPECTIVE AREAS
OF CHARACTERS AND COUNT NUMBER OF WORDS — S23

DETECT DISPLAY START TIME INSTANT AND
DISPLAY END TIME INSTANT OF CAPTION FROM
CHANGING POINTS OF DISPLAY CONTENTS
AND CALCULATE DIFFERENCE AS DISPLAY TIME — S24

CALCULATE SPEECH SPEED — S25

PERFORM POST-PROCESSING — S26

END

FIG. 12

EP 1 818 936 A1

# FIG. 13

START PROCESS OF CALCULATING SPEECH
SPEED IN INFORMATION PROCESSING APPARATUS

EXTRACT IMAGE DATA FROM CONTENT — S31

RECOGNIZE
CHARACTER STRING DISPLAYED IN IMAGE — S32

PERFORM PRE-PROCESSING — S33

COUNT NUMBER OF
WORDS OF RECOGNIZED CHARACTER STRINGS — S34

DETECT DISPLAY START TIME INSTANT AND DISPLAY
END TIME INSTANT OF CHARACTER STRING
FROM CHANGING POINTS OF DISPLAY CONTENTS — S35
AND CALCULATE DIFFERENCE AS DISPLAY TIME

CALCULATE SPEECH SPEED — S36

PERFORM POST-PROCESSING — S37

END

## FIG. 14

SPEECH SECTIONS
DETECTED FROM AUDIO

S1  S2  S3  S4          S5  S6  S7

CAPTION DISPLAY TIME

S1          S2

t

EP 1 818 936 A1

## FIG. 15

# FIG. 16

```
┌─────────────────────────────────────────────────┐
│      START PROCESS OF GENERATING ATTRIBUTE       │
│ INFORMATION IN INFORMATION PROCESSING APPARATUS  │
└─────────────────────────────────────────────────┘
                         │
                         ▼
┌─────────────────────────────────────────┐
│      DETECT PART WHERE SPEECH SPEED IS   │
│ FASTER THAN SPEECH SPEED TO BE THRESHOLD │─── S101
│      BASED ON SPEECH SPEED INFORMATION   │
└─────────────────────────────────────────┘
                         │
                         ▼
┌─────────────────────────────────────────┐
│  GENERATE ATTRIBUTE INFORMATION INDICATING│
│               VIGOROUS PART               │─── S102
└─────────────────────────────────────────┘
                         │
                         ▼
┌─────────────────────────────────────────┐
│            OUTPUT CONTENT                 │
│  TO WHICH ATTRIBUTE INFORMATION IS ADDED  │─── S103
└─────────────────────────────────────────┘
                         │
                         ▼
                    (   END   )
```

**European Patent Office**

**EUROPEAN SEARCH REPORT**

Application Number

EP 07 10 1904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMUDRAVIJAYA K ET AL: "Pre-recognition measures of speaking rate" SPEECH COMMUNICATION, AMSTERDAM, NL, vol. 24, no. 1, April 1998 (1998-04), pages 73-84, XP004148061 ISSN: 0167-6393 | 1-3,11, 12 | INV. G11B27/10 G11B20/12 |
| Y | * page 74, left-hand column, line 29 - line 46 * <br> * page 74, right-hand column, line 30 - line 46 * <br> * page 76, left-hand column, line 20 - line 33 * <br> * page 76, right-hand column, line 15 - line 27 * <br> * page 77, left-hand column, line 16 - right-hand column, line 11 * <br> * page 78, left-hand column, line 13 - line 34 * | 4-10 | |
| | ----- | | |
| P,Y | US 2007/011012 A1 (YURICK STEVE [US] ET AL) 11 January 2007 (2007-01-11) | 4-10 | |
| P,A | * page 2, paragraph 15 - paragraph 16 * <br><br> * page 3, paragraph 25 * <br> * page 4, paragraph 32 - paragraph 33 * <br> * page 5, paragraph 37 * <br> * page 5, paragraph 40 - page 6, paragraph 45 * <br> * page 7, paragraph 55 * <br> * page 8, paragraph 63 - page 9, paragraph 65 * | 1-3,11, 12 | TECHNICAL FIELDS SEARCHED (IPC) <br> G10L <br> G11B <br> G06F <br> H04N |
| | ----- <br> -/-- | | |

The present search report has been drawn up for all claims

| Place of search | Date of completion of the search | Examiner |
|---|---|---|
| Munich | 20 April 2007 | Aalburg, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 10 1904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCHULLER B ET AL: "Multimodal emotion recognition in audiovisual communication" MULTIMEDIA AND EXPO, 2002. ICME '02. PROCEEDINGS. 2002 IEEE INTERNATIONAL CONFERENCE ON LAUSANNE, SWITZERLAND 26-29 AUG. 2002, PISCATAWAY, NJ, USA,IEEE, US, vol. 1, 26 August 2002 (2002-08-26), pages 745-748, XP010604476 ISBN: 0-7803-7304-9 * page 746, right-hand column, line 22 - line 29 * | 5 | |
| X | JP 07 295588 A (JAPAN BROADCASTING CORP) 10 November 1995 (1995-11-10) * page 1, paragraph 1 * * page 2, paragraph 3 - paragraph 6 * * page 2, paragraph 9 - page 4, paragraph 14 * | 1-3,11, 12 | |
| | | | TECHNICAL FIELDS SEARCHED (IPC) |

The present search report has been drawn up for all claims

| Place of search | Date of completion of the search | Examiner |
|---|---|---|
| Munich | 20 April 2007 | Aalburg, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 818 936 A1**

## ANNEX TO THE EUROPEAN SEARCH REPORT
## ON EUROPEAN PATENT APPLICATION NO.

EP 07 10 1904

20-04-2007

| Patent document cited in search report | | Publication date | Patent family member(s) | Publication date |
|---|---|---|---|---|
| US 2007011012 | A1 | 11-01-2007 | NONE | |
| JP 7295588 | A | 10-11-1995 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006030483 A

- JP 2004128849 A